**Europäisches Patentamt**

**European Patent Office**

**Office européen des brevets**

(19)

(11) Numéro de publication : **0 483 016 A1**

# (12) DEMANDE DE BREVET EUROPEEN

(21) Numéro de dépôt : **91402865.9**

(22) Date de dépôt : **25.10.91**

(51) Int. Cl.⁵ : **G01M 17/04**

(30) Priorité : **26.10.90 FR 9013495**

(43) Date de publication de la demande :
**29.04.92 Bulletin 92/18**

(84) Etats contractants désignés :
**BE DE ES GB**

(71) Demandeur : **SOCIETE DES TECHNOLOGIES INDUSTRIELLES DE LA QUALITE " S.T.I.Q."**
**Rue Cardinal, Quartier de la "Ville en Bois"**
**F-17000 La Rochelle (FR)**

(72) Inventeur : **Boussaton, Jean-Pierre**
**71 avenue Robespierre**
**F-17000 La Rochelle (FR)**

(74) Mandataire : **Polus, Camille et al**
**c/o Cabinet Lavoix 2, Place d'Estienne d'Orves**
**F-75441 Paris Cedex 09 (FR)**

(54) **Procédé et dispositif de contrôle de l'efficacité d'une suspension in situ.**

(57)  Procédé de contrôle de l'état d'une suspension d'un véhicule (28) comprenant des roues (18) montées sur des bras articulés par rapport à la carrosserie et des éléments amortisseurs interposés entre ces bras et la carrosserie, caractérisé en ce qu'on entraîne les roues en oscillation verticale à l'aide d'un plateau (16) d'entraînement, on mesure le déphasage D entre les déplacements de ce plateau d'entraînement et les déplacements relatifs des roues par rapport à la carrosserie sur une période d'oscillation.

FIG.1

**EP 0 483 016 A1**

La présente invention a pour objet un procédé et un dispositif de contrôle de l'efficacité d'une suspension in situ.

L'état de l'ensemble de la suspension d'un véhicule doit être contrôlé régulièrement afin de vérifier l'efficacité d'une suspension et ceci dans un double but de confort des passagers mais surtout de sécurité et notamment de façon à conférer au véhicule une bonne tenue de route.

Les fonctions d'une suspension sont nombreuses.

Tout d'abord, la suspension permet aux roues de suivre le profil de la route et de compenser les inégalités du sol sans communiquer à la carrosserie des efforts ou des chocs trop importants lorsque la roue passe sur un obstacle en creux ou en saillie par rapport au niveau du sol.

D'une part, la suspension permet d'assurer le contact des roues avec le sol, ceci en permanence lorsque le véhicule se déplace.

D'autre part, la suspension permet de réduire au maximum les mouvements de la carrosserie et par conséquent, les oscillations de l'habitacle de façon à accroître le confort des passagers.

La suspension permet également d'assurer une position déterminée du plan des roues lors des débattements de la carrosserie par rapport au sol et pour les suspensions à correction de hauteur, le rôle est complété par le fait que la suspension maintient la carrosserie à une distance constante du sol.

Plusieurs éléments de la suspension interviennent pour remplir ces fonctions.

Tout d'abord le pneumatique avec son enveloppe se conduit comme un amortisseur puisqu'il contient un volume d'air constant à une pression déterminée et que ce volume d'air peut se comprimer.

Il est également prévu un ressort et/ou des barres de torsion complémentaires disposés entre les éléments mobiles des bras de suspension et la carrosserie ainsi que des "silentblocs" disposés généralement sur les bras de suspension.

Les frottements des divers éléments d'articulation tels que les rotules participent également à la suspension.

De plus, de façon connue, on interpose un amortisseur entre la roue et la carrosserie et l'on connaît des amortisseurs hydrauliques, pneumatiques, à gaz réglables, ou des combinaisons de ceux-ci.

En ce qui concerne les passagers, le siège joue également un rôle d'amortisseur puisqu'il comprend des ressorts, de la mousse et une garniture.

Néanmoins, la fonction de suspension qui intéresse directement la présente invention concerne essentiellement la fonction de la suspension qui permet à la roue de rester en contact avec le sol.

En effet, il est important de vérifier cette fonction là, car la dégradation de l'amortissement d'un véhicule, en plus de la perte de confort provoque le décollement de la roue en cas de faible débattement répété à moyenne et haute fréquence, car la roue entre en résonance et rebondit sur le sol.

C'est le cas, par exemple, d'un véhicule roulant à 80 kilomètres heure sur une chaussée comportant des creux et des bosses rapprochés de faible amplitude. Si le phénomène n'est pas trop grave en ligne droite, il le devient lorsque le véhicule se déplace dans une courbe car lors des différents rebonds de la roue, il y a perte d'adhérence du pneumatique sur la chaussée et le véhicule, écarté à l'extérieur du virage par la force centrifuge, ne peut être contrôlé par le conducteur.

Un examen et une analyse de cette perte d'adhérence de la roue montrent qu'il existe un décalage entre la position de la roue et le sol et entre la position de la roue et celle de la carrosserie.

On peut également considérer que le pneumatique, pour autant qu'il contienne la pression d'air préconisée par le constructeur, ne peut faire évoluer considérablement l'amortissement, quel que soit le degré d'usure, mais par contre il est utile de vérifier l'évolution de l'amortisseur, de l'efficacité des attaches des masses en mouvement et du jeu des éléments.

Il est possible de vérifier l'efficacité d'un amortisseur en le démontant, mais dans ce cas, seul l'élément amortisseur est testé mais les autres paramètres intervenant dans la suspension, tels que les liaisons, les jeux, les articulations, l'inertie du véhicule et les autres éléments participant à la suspension ne sont pas pris en compte.

Une suspension dont l'amortissement est correct doit conserver la roue en relation avec le sol jusqu'à une certaine fréquence alors qu'une suspension faible permet des mouvements de la roue qui ne correspondent plus aux sollicitations que cette roue reçoit.

Le but de la présente invention est de proposer un procédé et un dispositif qui permettent de vérifier l'état des amortisseurs en prenant en compte tous les autres éléments participant à la suspension, qui est rapide, qui est adaptable à tous types de véhicules, qui est non destructif, reproductible et fiable.

A cette fin, le procédé de contrôle de l'état d'une suspension d'un véhicule in situ, comprenant des roues montées sur des bras articulés par rapport à la carrosserie et des éléments amortisseurs interposés entre ces bras et la carrosserie se caractérise en ce qu'on entraîne les roues en oscillation verticale à l'aide d'un plateau d'entraînement mobile avec une périodicité et une amplitude données, on mesure le déphasage entre les déplacements et ce plateau d'entraînement et les déplacements relatifs des roues par rapport à la carrosserie sur une période du mouvement oscillant sinusoïdal.

Le dispositif pour la mise en oeuvre de ce procédé selon un mode de réalisation principal comprend au moins un plateau oscillant recevant une roue du véhicule, des moyens de mesure des déplacements de la roue, des moyens de mesure des déplacements du plateau oscillant, et des moyens d'enregistrement de ces déplacements en fonction du temps.

Selon une autre caractéristique du dispositif, la fréquence et l'amplitude des déplacements verticaux sont réglables.

Quant aux moyens d'enregistrement, ils comprennent de façon complémentaire des moyens de mémorisation afin de permettre des analyses comparatives de la suspension au cours du temps.

Dans le mode de réalisation principal retenu, le plateau oscillant est entraîné par des moyens électro-mécaniques du type comportant un excentrique entraîné par un moteur électrique.

Le plateau est également muni de galets disposés de part et d'autre de la roue de façon à limiter les déplacements de ladite roue sur le plateau.

Quant au plateau, dans un mode de réalisation préféré de l'invention, il est orientable dans le plan horizontal de façon à absorber les écarts de positionnement de la roue à contrôler.

Le dispositif selon l'invention, comprend également des moyens de visualisation et d'impression des données, reliés aux moyens de mesure des déplacements de la roue et du plateau.

La présente invention est décrite ci-après selon un mode de réalisation particulier, en regard des dessins annexés sur lesquels :

– la figure 1 représente une vue schématique d'un dispositif de contrôle de l'état d'une suspension d'un véhicule selon l'invention,

– la figure 2 représente une vue de l'installation complète du dispositif et de l'ensemble des moyens d'enregistrement et de mesure, et

– la figure 3 représente un schéma synoptique des déplacements relatifs du plateau et de la roue en fonction du temps lors des oscillations imprimées par le plateau, avec la représentation graphique correspondante.

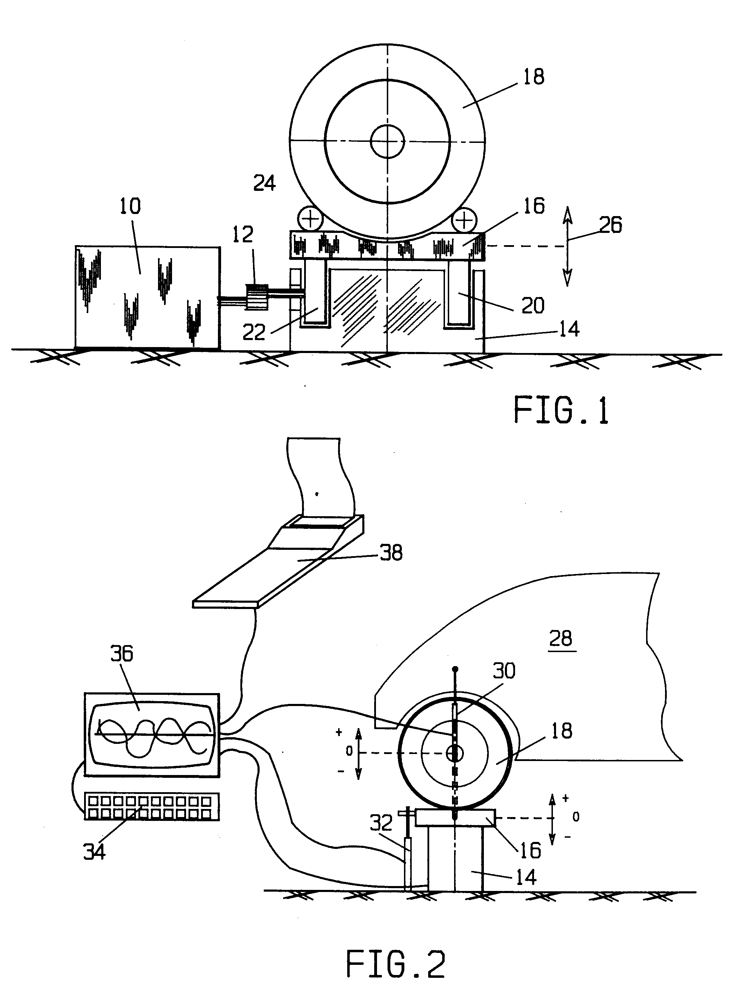

Sur la figure 1 on a représenté un schéma simplifié du dispositif électro-mécanique d'entraînement du plateau oscillant, qui comprend un moteur électrique 10, un excentrique 12, un bâti 14, un plateau oscillant 16 et une roue du véhicule à tester 18. Le bâti 14 repose sur le sol et reçoit dans des logements 20 des guides 22, montées mobiles en translations dans ces logements 20, supportant à leur extrémité supérieure le plateau oscillant 16.

Ce plateau oscillant 16 comprend des galets 24, disposés de part et d'autre de la roue, la roue venant en appui sur ces galets sans toucher le plateau.

Les oscillations sont symbolisées par la double flèche 26.

Sur la figure 2, on a représenté un véhicule 28, dont la roue 18 repose sur le plateau oscillant 16, lui-même guidé par le bâti 14.

Sur cette figure 2 on a également représenté les moyens 30 de mesure des déplacements de la roue par rapport à la carrosserie ainsi que des moyens 32 de mesure des déplacements du plateau oscillant 16 par rapport au sol.

Le dispositif de contrôle selon l'invention est complété par un système informatique d'acquisition et de traitement des données 34 avec des moyens 26 de visualisation, ainsi que des moyens 38 d'impression des résultats.

Le système informatique d'acquisition et de traitement des données reçoit les données des moyens de mesure de déplacement 30 et 32, pilote le moteur 10 ainsi que l'imprimante 38.

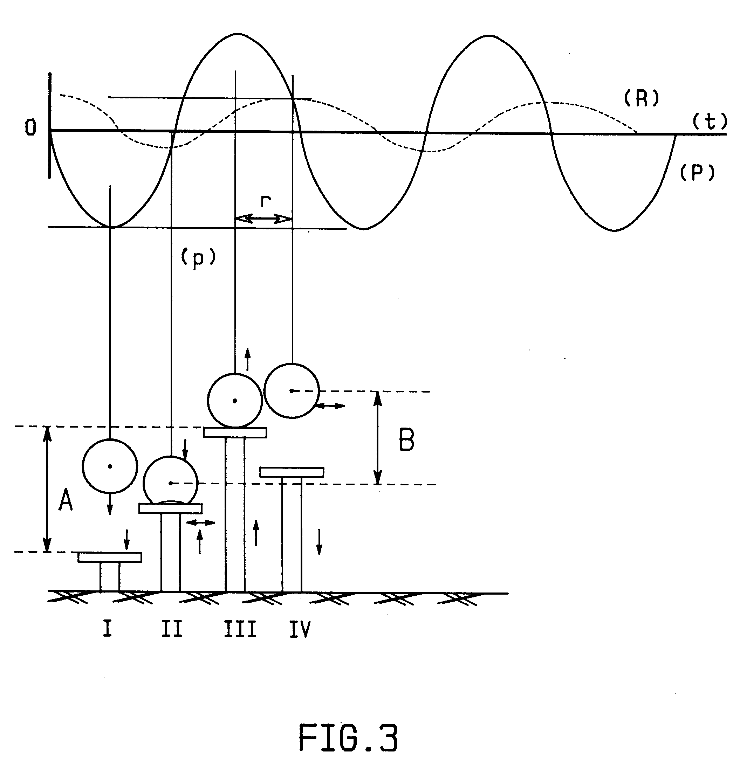

La figure 3 représente les résultats d'essais et de la mise en oeuvre du dispositif représenté sur les figures 1 et 2.

Durant la phase I, sur cette figure 3, le plateau d'entraînement est en position basse.

Le plateau étant descendu brusquement, la roue n'est plus en contact avec ce plateau et elle n'a pas terminé son déplacement vers le bas sous l'effet des éléments de suspension, car elle est freinée par ces mêmes éléments et plus particulièrement par l'amortisseur.

Le poids des masses en mouvement, correspondant à la roue et à la suspension, va entraîner la roue en descente et simultanément le plateau remonte, ce qui se traduit sur la courbe P, correspondant à la sinusoïde de déplacement du plateau en fonction du temps, par une remontée de la courbe jusqu'à ce qu'il y ait un équilibre, c'est-à-dire jusqu'au droit du point correspondant à l'intersection de cette courbe P avec la courbe R, qui représente la courbe des déplacements de la roue. La roue va descendre jusqu'à ce que le pneumatique s'écrase grâce à son élasticité pour arriver au point d'équilibre.

A la fréquence de sollicitation et aux débattements retenus, on considère la carrosserie comme sensiblement stable.

Durant cette phase II, on arrive au point bas de la roue mais le plateau continue à monter jusqu'à son point haut maximum, c'est-à-dire la phase III ce qui correspond au sommet de la courbe P.

Lors de sa montée le plateau a conféré à la roue et aux masses suspendues une accélération qui provoque un déplacement supplémentaire vers le haut de l'ensemble de la roue, bien que le plateau d'entraînement soit déjà en descente comme le montre la phase IV, phase dans laquelle le plateau redescend et la roue continue à monter jusqu'à son point haut maximum correspondant à l'un des sommets de la courbe R, si bien que sur ces deux schémas on peut mesurer A, l'amplitude de déplacement du plateau, ainsi que B, l'amplitude de déplacement de la roue. De plus, les sommets, c'est-à-dire les points hauts maximum atteints respectivement par le plateau et la roue, correspondant au sommet des courbes P et R sont décalées dans le temps d'une valeur r. Ce décalage peut être mesuré sur une période, si bien qu'on peut en déduire le pourcentage de déphasage D par la formule suivante :

$$D \text{ (en \%)} = \frac{\text{retard (r)}}{\text{période (p)}} \times 100$$

Les essais peuvent être réalisés à une fréquence comprises entre 0 et 25 Hz sous un mouvement d'amplitude variable, compris entre 0 et 10 mm.

Quant à la vitesse de sollicitation de la roue, elle s'échelonne entre 0 et 800 mm par seconde.

Ainsi, les déphasages mesurés sont très caractéristiques de la qualité de la suspension et l'on peut en déduire que les déphasages faibles correspondent à des suspensions satisfaisantes, les déphasages moyens à des suspensions ayant des qualités correspondant au minimum nécessaire d'amortissement, quant aux déphasages forts, ils correspondent à des suspensions trop faibles en amortissement qui doivent être corrigées, améliorées ou changées.

On remarque, par ailleurs, que les résultats sont cohérents, quel que soit le type de suspensions, à ressort, à barres de torsion, à amortisseur combiné avec amortisseur hydraulique disposé à l'intérieur, ou d'un ressort à l'extérieur, notamment. On remarque que l'appareillage est conçu pour permettre de travailler sur la vitesse de la roue et/ou sur l'écart vitesse roue - vitesse plateau ou sur l'effort à la roue si l'on incorpore un capteur d'efforts plutôt qu'un capteur de déplacement sous le plateau d'entraînement.

De même l'appareillage peut être embarqué sur le véhicule, les résultats étant exploités par les positions du sol par rapport à la position de la roue.

De même l'analyse a porté sur les points hauts, c'est-à-dire position correspondant au rebond de la roue ou à la compression de la suspension, car le pneumatique a moins d'influence que dans l'autre sens. Mais on constate qu'un déphasage se produit également en sens inverse et que des conclusions similaires peuvent en être tirées.

Le procédé et le dispositif selon l'invention permettent de contrôler l'efficacité d'une suspension in situ, c'est-à-dire prenant en compte tous les autres paramètres du véhicule, qui est rapide puisqu'ils ne nécessitent aucun démontage des éléments de suspension.

De plus, ces procédé et dispositif sont adaptables puisque les amplitudes, les fréquences peuvent être modifiées soit au départ avec des mesures à valeur constante, soit avec des variations tout au long de la mesure afin d'étudier les variations de réponse de la suspension en fonction de la variation d'amplitude ou de fréquence.

Par ailleurs, le faiot que les pneumatiques des roues reposent sur les galets permet de s'affranchir des variations deus aux pressions de gonflage ou aux types de pneu, par exemple les pneus à hauteur réduite.

**Revendications**

1. Procédé de contrôle de l'état d'une suspension d'un véhicule (28) comprenant des roues (18) montées sur des bras articulés par rapport à la carrosserie et des éléments amortisseurs interposés entre ces bras et la carrosserie, caractérisé en ce qu'on entraîne les roues en oscillation verticale à l'aide d'un plateau (16) d'entraînement, on mesure le déphasage D entre les déplacements de ce plateau d'entraînement et les déplacements relatifs des roues par rapport à la carrosserie sur une période d'oscillation.

2. Dispositif pour la mise en oeuvre du procédé selon la revendication 1, caractérisé en ce qu'il comprend au moins un plateau (16) oscillant, recevant une roue (18) d'un véhicule, des moyens de mesure (30) des déplacements de la roue, des moyens de mesure (32) des déplacements du plateau et des moyens d'enregistrement (34) de ces déplacements en fonction du temps.

3. Dispositif selon la revendication 2, caractérisé en ce que la fréquence et l'amplitude des déplacements verticaux sont réglables.

4. Dispositif selon la revendication 2 ou 3, caractérisé en ce que les moyens d'enregistrement (34) comprennent des moyens de mémorisation afin de permettre des analyses comparatives de la suspension au cours du temps.

5. Dispositif selon l'une quelconque des revendications 2 à 4, caractérisé en ce que le plateau (16) est entraîné par des moyens électromécaniques (10, 14).

6. Dispositif selon l'une quelconque des revendications 2 à 5, caractérisé en ce que le plateau (16) comprend des galets (24) de part et d'autre de la roue de façon à limiter ses déplacements sur le plateau.

7. Dispositif selon l'une quelconque des revendications 2 à 6, caractérisé en ce que le plateau (16) est orientable dans le plan horizontal de façon à absorber les écarts de positionnement de la roue.

8. Dispositif selon l'une quelconque des revendications 2 à 7, caractérisé en ce qu'il comprend des moyens de visualisation (36) et d'impression (38) des données reliés aux moyens de mesure des déplacements.

EP 0 483 016 A1

FIG.1

FIG.2

FIG.3

**Office européen
des brevets**

# RAPPORT DE RECHERCHE EUROPEENNE

Numero de la demande

EP     91 40 2865

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| A | US-A-3 902 352 (BUZZI)<br>* le document en entier *<br>--- | 1,2,5,8 | G01M17/04 |
| A | ELECTRONICS & POWER<br>vol. 16, 1 Janvier 1970,<br>page 8; 'dynamic analysis for the automobile industrie'<br>* le document en entier *<br><br>----- | 1,2-5,8 | |
| | | | **DOMAINES TECHNIQUES RECHERCHES (Int. Cl.5)**<br><br>G01M |

Le présent rapport a été établi pour toutes les revendications

| Lieu de la recherche | Date d'achèvement de la recherche | Examinateur |
|---|---|---|
| LA HAYE | 05 FEVRIER 1992 | ZAFIROPOULOS N. |

EPO FORM 1503 03.82 (P0402)